# EUROPÄISCHE PATENTSCHRIFT

(11) **EP 1 979 393 B1**
(45) Veröffentlichungstag und Bekanntmachung des Hinweises auf die Patenterteilung: **17.06.2009**
(21) Anmeldenummer: 07700229.3
(22) Anmeldetag: 18.01.2007
(51) Int. Cl.: C08G 61/00

(54) **VERFAHREN ZUR HERSTELLUNG VON POLYTHIOPHENEN**
PROCESS FOR PREPARING POLYTHIOPHENES
PROCEDE DE FABRICATION DE POLYTHIOPHENES

(30) Priorität: 20.01.2006 DE 102006002797
(43) Veröffentlichungstag der Anmeldung: 15.10.2008
(73) Patentinhaber: H.C. Starck GmbH, 38642 Goslar (DE)
(72) Erfinder: REUTER, Knud, 47800 Krefeld (DE); KIRCHMEYER, Stephan, 51375 Leverkusen (DE)
(74) Vertreter: Clauswitz, Kai-Uwe Wolfram
(86) Internationale Anmeldenummer: PCT/EP2007/000399
(87) Internationale Veröffentlichungsnummer: WO 2007/085371

(56) Entgegenhaltungen:
- EP-A2- 0 339 340
- EP-A2- 0 440 957
- US-A- 6 025 462

## Beschreibung

Die Erfindung betrifft ein neues Verfahren zur Herstellung von Polythiophenen, insbesondere leitfähigen Polythiophenen sowie die Verwendung hypervalenter Iodverbindungen als Oxidationsmittel bei der oxidativen Polymerisation von Thiophenen.

Die Verbindungsklasse der π-konjugierten Polymeren war in den letzten Jahrzehnten Gegenstand zahlreicher Veröffentlichungen. Sie werden auch als leitfähige Polymere oder als synthetische Metalle bezeichnet.

Leitfähige Polymere gewinnen zunehmend an wirtschaftlicher Bedeutung, da Polymere gegenüber Metallen Vorteile bezüglich der Verarbeitbarkeit, des Gewichts und der gezielten Einstellung von Eigenschaften durch chemische Modifikation haben. Beispiele für bekannte π-konjugierte Polymere sind Polypyrrole, Polythiophene, Polyaniline, Polyacetylene, Polyphenylene und Poly(p-phenylen-vinylene). Schichten aus leitfähigen Polymeren werden technisch vielfältig eingesetzt.

Die Herstellung leitfähiger Polymere erfolgt chenusch oder elektrochemisch oxidativ aus Vorstufen für die Herstellung leitfähiger Polymere wie z. B. gegebenenfalls substituierten Thiophenen, Pyrrolen und Anilinen und deren jeweiligen gegebenenfalls oligomeren Derivaten. Insbesondere die chemisch oxidative Polymerisation ist weit verbreitet, da sie technisch einfach in einem flüssigen Medium bzw. auf vielfältigen Substraten zu realisieren ist.

Ein besonders wichtiges und technisch genutztes Polythiophen ist das Poly(ethylen-3,4-dioxythiophen), das in seiner oxidierten Form sehr hohe Leitfähigkeiten aufweist und beispielsweise in der EP 339 340 A2 beschrieben ist. Eine Übersicht über zahlreiche Poly(alkylen-3,4-dioxythiophen)-Derivate, insbesondere Poly(ethylen-3,4-dioxythiophen)-Derivate, deren Monomer-bausteine, Synthesen und Anwendungen geben L. Groenendaal, F. Jonas, D. Freitag, H. Pielartzik & J. R. Reynolds, Adv. Mater. 12, (2000) S. 481 - 494.

Technisch gebräuchliche bzw. in der Literatur und Patentliteratur genannte Oxidationsmittel zur Herstellung von Poly(ethylen-3,4-dioxythiophen), (PEDT oder PEDOT, im folgenden PEDT genannt) aus Ethylen-3,4-dioxythiophen (EDT oder EDOT, im folgenden EDT genannt) stammen z. B. aus den Klassen der peroxidischen Verbindungen oder der Übergangsmetallsalze.

Als Oxidationsmittel geeignete peroxidische Verbindungen des Standes der Technik sind zum Beispiel Wasserstoffperoxid, Natriumperborat, Persulfate (Peroxodisulfate) der Alkalimetalle, wie Natrium- oder Kaliumpersulfat, oder Ammoniumpersulfat. In chemisch verwandte Weise erfolgt die Oxidation mit Luft bzw. Sauerstoff.

Solche Oxidationsmittel eignen sich besonders zur Herstellung von Polythiophen-Dispersionen, speziell Poly(ethylen-3,4-dioxythiophen)-Dispersionen, wie sie in EP-A 440 957 beschrieben werden. Solche wässrige Dispersionen enthalten bevorzugt polymere Sulfonsäuren als Polyanionen, die die Rolle der Gegenionen für die Poly(ethylen-3,4-dioxythiophen)-Kationen übernehmen.

Nachteilig an diesen im Wesentlichen peroxidischen Oxidationsmitteln ist die Beschränkung auf wässrige Systeme und eine Neigung zur Oxidation der Schwefelatome des Thiophenrings, die unter Umständen zu einer Begrenzung der erreichbaren elektrischen Leitfähigkeit oder zur Bildung von Nebenprodukten führen kann. Auch eignen sie sich nicht zur Herstellung leitfähiger Polymere aus weitere Schwefelatome enthaltenden Thiophenen, wie zum Beispiel dem Ethylen-3,4-oxythiathiophen, da das S-Atom des 6-Rings unter Bildung einer Sulfongruppe oxidiert wird und das gebildete Thiophen-Produkt nicht mehr oxidativ polymerisiert werden kann. Außerdem ist eine reproduzierbare Reaktionsführung mit peroxidischen Oxidationsmitteln üblicherweise nur möglich, wenn geeignete Katalysatoren in Form von Übergangsmetallsalzen, wie Eisen-II- oder Eisen-III-sulfat, zugesetzt werden. Die im Produkt von diesen Übergangsmetallionen verbleibenden Reste müssen in der Regel zur Erzielung optimaler Eigenschaften der leitfähigen Polythiophene, z. B. mittels Ionenaustauschern, entfernt werden.

Als Oxidationsmittel geeignete Übergangsmmetallsalze des Standes der Technik sind z. B. Eisen-III-salze wie FeCl₃, Eisen-III-perchlorat, Eisen-III-sulfat, Eisen-III-tosylat oder andere Fe-III-Sulfonate, wie z. B. Eisen-II-Camphersulfonat, Cer-IV-Salze, Kaliumpermanganat, Kaliumdichromat, oder Kupfer-II-salze wie Kupfer-II-tetrafluoroborat.

Nachteilig an Oxidationsmitteln auf Basis solcher Übergangsmetallsalze ist die Bildung von Salzen dieser Metalle in niedrigeren Oxidationsstufen (z. B. Fe-II-Salze, Mn-IV-Verbindungen, Cu-I-Salze)als zwangsläufig entstehende Nebenprodukte. Bei einer technischen Verwendung von leitfähigen Schichten, die auf Basis z. B. von EDT und Fe-III-Salzen z. B. für den Einsatz in Kondensatoren hergestellt werden, können diese Salze bzw. die in der leitfähigen Schicht verbleibenden Übergangsmetallionen in niedrigeren Oxidationsstufen stören und müssen in der Regel möglichst vollständig ausgewaschen werden. Hierzu sind oft mehrere Waschvorgänge erforderlich. Andernfalls kann die Kristallisation der Salze im Laufe der Zeit zu einem erhöhten Serienwiderstand durch auftretende Kontaktwiderstände führen. Zudem können die Kristalle bei mechanischer Beanspruchung des Kondensators das Dielektrikum oder die äußeren Kontaktschichten beschädigen, so dass der Reststrom ansteigt.

Es besteht somit Bedarf an Oxidationsmitteln zur Herstellung von Polythiophenen mittels chemischer oxidativer Polymerisation, die die genannten Nachteile nicht aufweisen.

Die Aufgabe der vorliegenden Erfindung bestand somit darin, geeignete Oxidationsmittel für die oxidative Polymerisation von Thiophenen aufzufinden und ein Verfahren zur Herstellung von Polythiophenen mittels chemisch oxidativer Polymerisation aufzufinden, wobei kein nachträgliches vollständiges Entfernen von Übergangsmetallionen erforderlich ist.

Diese Aufgabe wurde überraschend durch den Einsatz von hypervalenten Iodverbindungen als Oxidationsmittel für Herstellung von Polythiophenen mittels oxidativer Polymerisation gefunden. Bei Verwendung der hypervalenten Iodverbindungen ist kein zusätzlicher übergangsmetallionenhaltiger Katalysator erforderlich und eine vollständige und aufwändige Entfernung von Übergangsmetallionen entfällt somit.

Gegenstand der vorliegenden Erfindung ist somit ein Verfahren zur Herstellung von Polythiophenen durch oxidative Polymerisation von Thiophenen oder Thiophenderivaten, **dadurch gekennzeichnet, dass** als Oxidationsmittel wenigstens eine hypervalente Iodverbindung eingesetzt wird.

Bevorzugt werden nach dem erfindungsgemäßen Verfahren. Polythiopbene enthaltend wiederkehrende Einheiten der allgemeinen Formel (I), 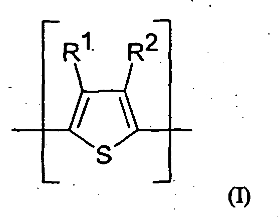 worin
- R¹ und R²: unabhängig voneinander jeweils für H, einen gegebenenfalls subsituierten C₁-C₁₈- Alkylrest oder einen gegebenenfalls subsituierten C₁-C₁₈-Alkoxyrest, oder
- R¹ und R²: zusammen für einen gegebenenfalls substituierten C₁-C₈-Alkylenrest, einen gege- benenfalls substituierten C₁-C₈-Alkylenrest, worin ein oder mehrere C-Atom(e) durch ein oder mehrere gleiche oder unterschiedliche Heteroatome ausgewählt aus O oder S ersetzt sein können, bevorzugt einen C₁-C₈-Dioxyalkylenrest, einen ge- gebenenfalls substituierten C₁-C₈-Oxythiaalkylenrest oder einen gegebenenfalls substituierten C₁-C₈-Dithiaalkylenrest, oder für einen gegebenenfalls substituierten C₁-C₈-Alkylidenrest, worin gegebenenfalls wenigstens ein C-Atom durch ein Hete- roatom ausgewählt aus O oder S ersetzt sein ist, stehen,
durch oxidative Polymerisation von Thiophenen der allgemeinen Formel (II), 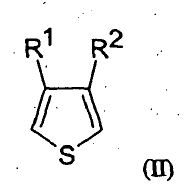 worin R¹ und R² die für die allgemeine Formel (I) genannte Bedeutung haben,
hergestellt.

Besonders bevorzugt werden nach dem erfindungsgemäßen Verfahren Polythiophene enthaltend wiederkehrende Einheiten der allgemeinen Formel (I-a) und/oder (I-b) 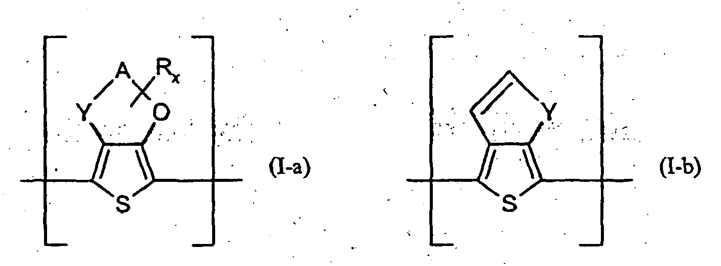 worin
- A: für einen gegebenenfalls substituierten C₁-C₅-Alkylenrest, bevorzugt für einen gegebenen- falls substituierten C₂₋C₃-Alkylenrest steht,
- Y: für O oder S steht,
- R: für einen linearen oder verzweigten, gegebenenfalls substituierten C₁-C₁₈-Alkylrest einen gegebenenfalls substituierten C₅-C₁₂-Cycloalkylrest, einen gegebenenfalls substituierten C₆-C₁₄-Arylrest, einen gegebenenfalls substituierten C₇-C₁₈-Aralkylrest, einen gegebenen- falls substituierten C₁-C₄-Hydroxyalkylrest oder einen Hydroxylrest steht,
- x: für eine ganze Zahl von 0 bis 8, bevorzugt für 0 oder 1 steht und
für den Fall, dass mehrere Reste R an A gebunden sind, diese gleich oder unterschiedlich sein könneun,
durch oxidative Polymerisation von Thiophenen der allgemeinen Formel (II-a) und/oder (II-b), 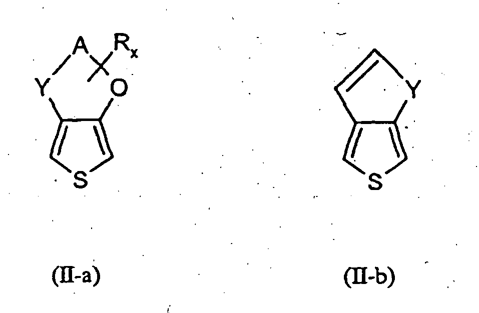 worin A, Y, R und x die für die allgemeinen Formeln (II-a) und (II-b) genannte Bedeutung haben,
hergestellt.

Die allgemeinen Formeln (I-a) und (II-a) sind so zu verstehen, dass x Substituenten R an den Alkylenrest A gebunden sein können.

Bevorzugt sind Polythiophene enthaltend wiederkehrende Einheiten der allgemeinen Formel (II-a) solche enthaltend wiederkehrende Einheiten der allgemeinen Formel (II-a-1) und/oder (II-a-2), 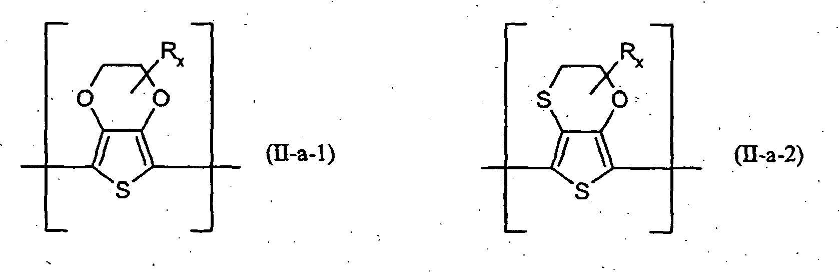 worin
- R und x: die oben genannte Bedeutung haben.

Besonders bevorzugt sind dies solche Polythiophene enthaltend wiederkehrende Einheiten der allgemeinen Formel (II-aa-1) und/oder (II-aa-2)

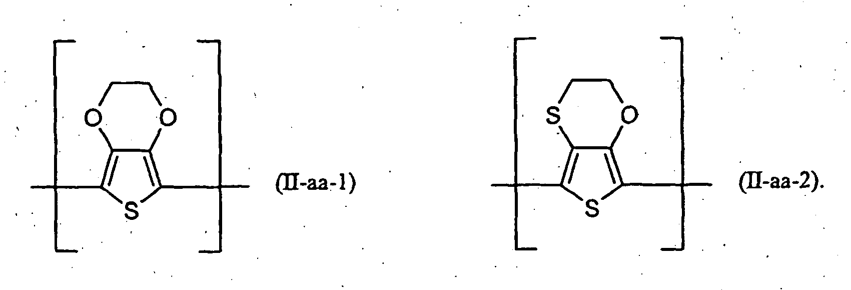

In besonders bevorzugten Ausführungsformen ist das Polythiophen mit wiederkehrenden Einheiten der allgemeinen Formel (II-a) und/oder (II-b) Poly(3,4-ethylendioxythiophen), Poly(3,4-ethylenoxythiathiophen) oder Poly(thieno[3,4-b]thiophen, d.h. ein Homopolythiophen aus wiederkehrenden Einheiten der Formel (II-aa-1), (II-aa-2) oder (II-b).

In weiteren besonders bevorzugten Ausführungsformen ist das Polythiophen mit wiederkehrenden Einheiten der allgemeinen Formel (II-a) und/oder (II-b) ein Copolymer aus wiederkehrenden Einheiten der Formel (II-aa-1) und (II-aa-2), (II-aa-1) und (II-b), (II-aa-2) und (II-b) oder (II-aa-1), (II-aa-2) und (II-b), wobei Copolymere aus wiederkehrenden Einheiten der Formel (II-aa-1) und (II-aa-2) sowie (II-aa-1) und (II-b) bevorzugt sind.

Die Polythiophene können neutral oder kationisch sein. In bevorzugten Ausführungsformen sind sie kationisch, wobei sich "kationisch" nur auf die Ladungen bezieht, die auf der Polythiophenhauptkette sitzen. Je nach Substituent an den Resten R können die Polythiophene positive und negative Ladungen in der Struktureinheit tragen, wobei sich die positiven Ladungen auf der Polythiophenhauptkette und die negativen Ladungen gegebenenfalls an den durch Sulfonat- oder Carboxylatgruppen substituierten Resten R befinden. Dabei, können die positiven Ladungen der Polythiophenhauptkette zum Teil oder vollständig durch die gegebenenfalls vorhandenen anionischen Gruppen an den Resten R abgesättigt werden. Insgesamt betrachtet können die Polythiophene in diesen Fällen kationisch, neutral oder sogar anionisch sein. Dennoch werden sie im Rahmen der Erfindung alle als kationische Polythiophene betrachtet, da die positiven Ladungen auf der Polythiophenhauptkette maßgeblich sind. Die positiven Ladungen sind in den Formeln nicht dargestellt, da ihre genaue Zahl und Position nicht einwandfrei feststellbar sind. Die Anzahl der positiven Ladungen beträgt jedoch mindestens 1 und höchstens n, wobei n die Gesamtanzahl aller wiederkehrenden Einheiten (gleicher oder unterschiedlicher) innerhalb des Polythiophens ist.

Bevorzugt werden mit dem erfindungsgemäßen Verfahren leitfähige Polythiophene mit einer spezifischen Leitfähigkeit von mehr als 10⁻³ Scm⁻¹, besonders bevorzugt von 10⁻² Scm⁻¹ hergestellt.

Zur Kompensation der positiven Ladung, soweit dies nicht bereits durch die gegebenenfalls Sulfonat- oder Carboxylat-substituierten und somit negativ geladenen Reste R erfolgt, benötigen die kationischen Polythiophene Anionen als Gegenionen.

Bevorzugt wird das erfindungsgemäße Verfahren in Gegenwart wenigstens eines Gegenions durchgeführt.

Als Gegenionen kommen monomere oder polymere Anionen, letztere im Folgenden auch als Polyanionen bezeichnet, in Frage.

Bevorzugte polymere Anionen sind beispielsweise Anionen polymerer Carbonsäuren, wie Polyacrylsäuren, Polymethacrylsäuren oder Polymaleinsäuren, oder polymerer Sulfonsäuren, wie Polystyrolsulfonsäuren und Polyvinylsulfonsäuren. Diese Polycarbon- und -sulfonsäuren können auch Copolymere von Vinylcarbon- und Vinylsulfonsäuren mit anderen polymerisierbaren Monomeren, wie Acrylsäureestern und Styrol, sein. Dies können beispielsweise auch SO₃⁻M⁺- oder COOM⁺-Gruppen enthaltende teilfluorierte oder perfluorierte Polymere stein, wobei M⁺ beispielsweise für Li⁺, Na⁺, K⁺, Rb⁺, Cs⁺ oder NH₄⁺, bevorzugt für H⁺, Na⁺ oder K⁺ steht. Bei einem solchen SO₃⁻M⁺- oder COO⁻M⁺-Gruppen enthaltenden teilfluorierten oder perfluorierten Polymer kann es sich beispielsweise um Nafion^{®} handeln, welches z.B. kommerziell im Handel erhältlich ist. Auch Mischungen aus einem oder mehreren dieser polymeren Anionen kommen in Frage.

Besonders bevorzugt als polymeres Anion ist das Anion der Polystyrolsulfonsäure (PSS) als Gegenion.

Das Molekulargewicht der die Polyanionen liefernden Polysäuren beträgt vorzugsweise 1 000 bis 2 000 000, besonders bevorzugt 2 000 bis 500 000. Die Polysäuren oder ihre Alkalisalze sind im Handel erhältlich, z.B. Polystyrolsulfonsäuren und Polyacrylsäuren, oder aber nach bekannten Verfahren herstellbar (siehe z.B. Houben Weyl, Methoden der organischen Chemie, Bd. E 20 Makromolekulare Stoffe, Teil 2, (1987), S. 1141 u.f.).

Als monomere Anionen dienen beispielsweise solche von C₁-C₂₀-Alkansulforisäuren, wie der Methan-, Ethan-, Propan-, Butan- oder höheren Sulfonsäuren, wie der Dodecansulfonsäure, von aliphatischen Perfluorsulfonsäuren, wie der Trifluormethansulfonsäure, der Perfluorbutansulfonsäure oder der Perfluoroctansulfonsäure, von aliphatischen C₁-C₂₀-Carbonsäuren wie der 2-Ethylhexylcarbonsäure, von aliphatischen Perfluorcarbonsäuren, wie der Trifluoressigsäure oder der Perfluoroctansäure, und von aromatischen, gegebenenfalls durch C₁-C₂₀-Alkylgruppen substituierten Sulfonsäuren wie der Benzolsulfonsäure, o-Toluolsulfonsäure, p-Toluolsulfonsäure, Dodecylbenzolsulfonsäure, Dinonylnaphthalinsulfonsäure oder Dinonylnaphthalindisulfonsäure, und von Cycloalkansulfonsäuren wie Camphersulfonsäure oder Tetrafluoroborate, Hexafluorphosphate, Perchlorate, Hexafluoroantimonate, Hexafluoroarsenate oder Hexachloroantimonate.

Besonders bevorzugt sind die Anionen der p-Toluolsulfonsäure, Methansulfonsäure oder Camphersulfonsäure.

Es können auch Anionen des verwendeten Oxidationsmittels oder aus diesem nach der Reduktion gebildete Anionen als Gegenionen dienen, so dass eine Zugabe zusätzlicher Gegenionen nicht zwingend erforderlich ist.

Kationische Polythiophene, die zur Ladungskompensation Anionen als Gegenionen enthalten, werden in der Fachwelt auch oft als Polythiophen/(Poly-)Anion-Komplexe bezeichnet.

Bevorzugte Thiophene der allgemeinen Formel (II-a) sind solche der allgemeinen Formel (II-a-1) und/oder (II-a-2)

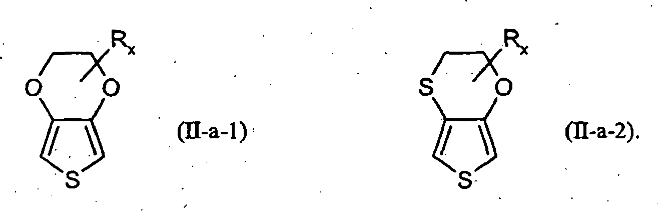

Besonders bevorzugt werden als Thiophene der allgemeinen Formel (II-a) solche der allgemeinen Formel (II-aa-1) und/oder (II-aa-2) 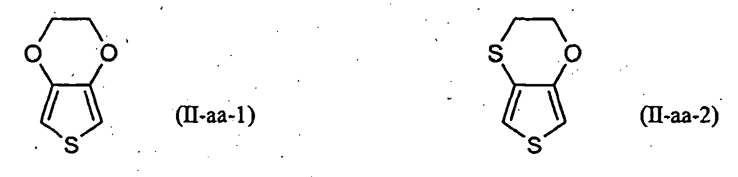 eingesetzt.

Unter Derivaten der vorangehend aufgeführten Thiophene werden im Sinne der Erfindung beispielsweise Dimere oder Trimere dieser Thiophene verstanden. Es sind auch höhermolekulare Derivate, d.h. Tetramere, Pentamere etc. der monomeren Vorstufen als Derivate möglich. Die Derivate können sowohl aus gleichen wie unterschiedlichen Monomereinheiten aufgebaut sein und in reiner Form sowie im Gemisch untereinander und/oder mit den.vorangehend genannten Thiophenen eingesetzt werden. Auch oxidierte oder reduzierte Formen dieser Thiophene und Thiophenderivate sind im Sinne der Erfindung von dem Begriff Thiophene und Thiophenderivate umfasst sofern bei ihrer Polymerisation die gleichen leitfähigen Polymeren entstehen wie bei den vorangehend aufgeführten Thiophenen und Thiophenderivaten.

Verfahren zur Herstellung der Thiophene sowie deren Derivaten sind dem Fachmann bekannt und beispielsweise in L. Groenendaal, F. Jonas, D. Freitag, H. Pielartzik & J. R. Reynolds, Adv. Mater. 12 (2000) 481 - 494 und darin zitierter Literatur beschrieben.

Die Thiophene können gegebenenfalls in Form von Lösungen eingesetzt werden. Als geeignete Lösungsmittel seien vor allem folgende unter den Reaktionsbedingungen inerte organische Lösungsmittel genannt: aliphatische Alkohole wie Methanol, Ethanol, i-Propanol und Butanol; aliphatische Ketone wie Aceton und Methylethylketon; aliphatische Carbonsäureester wie Essigsäureethylester und Essigsäurebutylester; aromatische Kohlenwasserstoffe wie Toluol und Xylol; aliphatische Kohlenwasserstoffe wie Hexan, Heptan und Cyclohexan; Chlorkohlenwasserstoffe wie Dichlormethan und Dichlorethan; aliphatische Nitrile wie Acetonitril, aliphatische Sulfoxide und Sulfone wie Dimethylsulfoxid und Sulfolan; aliphatische Carbonsäureamide wie Methylacetamid, Dimethylacetamid und Dimethylformamid; aliphatische und araliphatische Ether wie Diethylether und Anisol. Weiterhin kann auch Wasser oder ein Gemisch aus Wasser mit den vorgenannten organischen Lösungsmitteln als Lösungsmittel verwendet werden. Bevorzugte Lösungsmittel sind Alkohole und Wasser sowie Mischungen enthaltend Alkohole oder Wasser bzw. Mischungen aus Alkoholen und Wasser.

Thiophene, die unter den Oxidationsbedingungen flüssig sind, können auch in Abwesenheit von Lösungsmitteln polymerisiert werden.

C₁-C₅-Alkylenreste A sind im Rahmen der Erfindung: Methylen, Ethylen, n-Propylen, n-Butylen oder n-Pentylen, C₁-C₈-Alkylenreste darüber hinaus n-Hexylen, n-Heptylen und n-Oktylen. C₁-C₈-Alkylidenreste sind im Rahmen der Erfindung vorangehend aufgeführte C₁-C₈-Alkylenreste enthaltend wenigstens eine Doppelbindung. C₁-C₈-Dioxyalkylenreste, C₁-C₈-Oxythiaalkylenreste und C₁-C₈-Dithiaalkylenreste stehen im Rahmen der Erfindung für die den vorangehend aufgeführten C₁-C₈-Alkylenreste entsprechenden C₁-C₈-Dioxyalkylenreste, C₁-C₈-Oxythiaalkylenreste und C₁-C₈-Dithiaalkylenreste. C₁-C₁₈-Alkyl steht im Rahmen der Erfindung für lineare oder verzweigte C₁-C₁₈-Alkylreste wie beispielsweise Methyl, Ethyl, n- oder iso-Propyl, n-, iso-, sec- oder tert-Butyl, n-Pentyl, 1-Methylbutyl, 2-Methylbutyl, 3-Methylbutyl, 1-Ethylpropyl, 1,1-Dimethylpropyl, 1,2-Dimethylpropyl, 2,2-Dimethylpropyl, n-Hexyl, n-Heptyl, n-Octyl, 2-Ethylhexyl, n-Nonyl, n-Decyl, n-Undecyl, n-Dodecyl, n-Tridecyl, n-Tetradecyl, n-Hexadecyl oder n-Octadecyl, C₅-C₁₂-Cycloalkyl für C₅-C₁₂-Cycloalkylreste, wie Cyclopentyl, Cyclohexyl, Cycloheptyl, Cyclooctyl, Cyclononyl oder Cyclodecyl, C₅-C₁₄-Aryl für C₆-C₁₄-Aryireste wie Phenyl oder Naphthyl, und C₇-C₁₈-Aralkyl für C₇-C₁₈-Aralkylreste wie beispielsweise Benzyl, o-, m-, p-Tolyl, 2,3-, 2,4-, 2,5-, 2,6-, 3,4-, 3,5-Xylyl oder Mesityl. C₁-C₁₈-Alkoxyreste stehen im Rahmen der Erfindung für die den vorangehend aufgeführten C₁-C₁₈Alkylresten entsprechenden Alkoxyreste. Die vorangehende Aufzählung dient der beispielhaften Erläuterung der Erfindung und ist nicht als abschließend zu betrachten.

Als gegebenenfalls weitere Substituenten der vorangehenden Reste kommen zahlreiche organische Gruppen in Frage, beispielsweise Alkyl-, Cycloalkyl-, Aryl-, Halogen-, Ether-, Thioether-, Disulfid-, Sulfoxid-, Sulfon-, Sulfonat-, Amino-, Aldehyd-, Keto-, Carbonsäureester-, Carbonsäure-, Carbonat-, Carboxylat-, Cyano-, Alkylsilan- und Alkoxysilangruppen sowie Carboxylamidgruppen.

Unter hypervalenten Iodverbindungen im Sinne der vorliegenden Erfindung sind organische Iodverbindungen zu verstehen, in denen das Iodatom mehr als einfach koordiniert, d.h. wenigstens zweifach koordiniert ist, und nicht in der formalen Oxidationsstufe -1 oder 0 vorliegt. Solche Iodverbindungen werden z. B. in "Hypervalent Iodine In Organic Synthesis" von A. Varvoglis (Academic Press, San Diego/London 1997) beschrieben. Weiterhin sind unter hypervalenten Iodverbindungen im Sinne der Erfindung anorganische Iodverbindungen zu verstehen, in denen das Iodatom mehr als einfach koordiniert, d.h. wenigstens zweifach koordiniert ist, und nicht in der formalen Oxidationsstufe -1 oder 0 vorliegt. Bevorzugte anorganische hypervalente Iodverbindungen sind solche, in denen das Iodatom in der formalen Oxidationsstufe +1, +3, +5 oder +7 vorliegt. Solche hypervalenten anorganischen Iodverbindungen sind beispielsweise Iodsäure und ihre Salze, beispielsweise Alkali- oder Erdalkalisalze wie Natrium- und Kaliumiodat (Oxidationsstufe + 5), Periodsäure und ihre Salze, beispielsweise Alkali- oder Erdalkalisalze wie wie Natrium-periodat (Oxidationsstufe + 7), oder die formal von diesen Sauerstoffsäuren des Iods abgeleiteten Anhydride, wie z. B. das Iodpentoxid (I₂O₅). Besonders bevorzugte anorganische hypervalente Iodverbindungen sind solche, in denen das Iodatom in der formalen Oxidationsstufe +5 vorliegt.

Bevorzugte organische hypervalente Iodverbindungen sind z. B. Aryliod-(III)-Verbindungen, wie beispielsweise Bis(acyloxy)iod-aromaten wie Diacetoxy-iodbenzol (IM) oder Bis(trifluoracetoxy)-iodbenzol (IV), Difluor- und Dichlor-iodbenzol (V), Iodosylbenzol (VI), Hydroxy(tosyloxy)iodberizol ("Koset's' Reagens", (VII)), ferner Iodylbenzol (VIII), 1-Oxido-1-1-hydroxybenzoiodoxol-3(1H)-on ("o-Iodyl-benzoesäure", (IX)), 1,1,1-Triacetoxy-1,1-dihydro-1,2-benzoiodoxol-3(1H)-on ("Dess-Martin-Reagens" oder "Dess-Martin-Periodinan", (X)), weiterhin Aryl-iodoniumsalze, wie z. B. aus der Gruppe der Diaryliodoniumsalze Diphenyliodoniumchlorid (XI) oder Phenyl-4-methoxyphenyl-iodoniumtriflat (XII), gemischte Alkyl-aryl-iodoniumsalze, die gegebenenfalls teil- oder perfluoriert sein können, sowie weitere Iod-(III)-Salze organischer Säuren, beispielsweise Iod-(III)-Salze von gegebenenfalls teil- oder perfluorierten C₁-C₁₈-Alkylsulfon- oder C₁-C₁₈-Alkylcarbonsäuren wie Iod-tris(trifluoracetat) oder Iod-tris(trifluormethansulfonat). Die Verbindungen der Formeln (III) bis (XII) sind im Folgenden beispielhaft gezeigt:

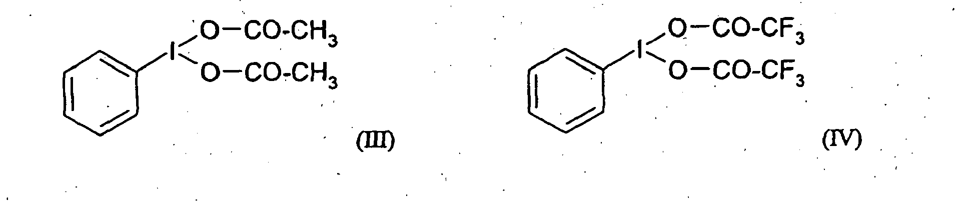

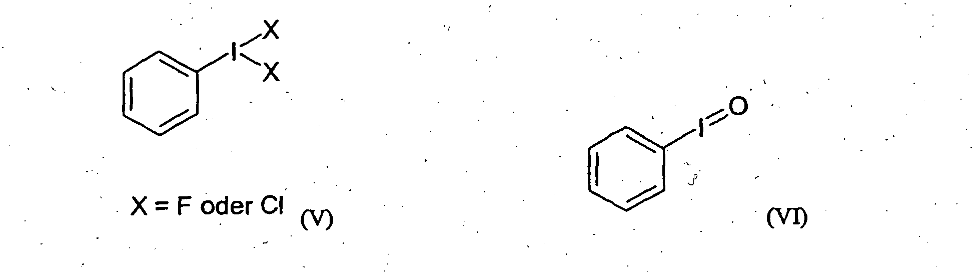

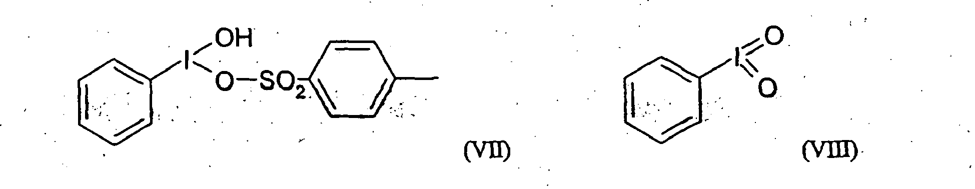

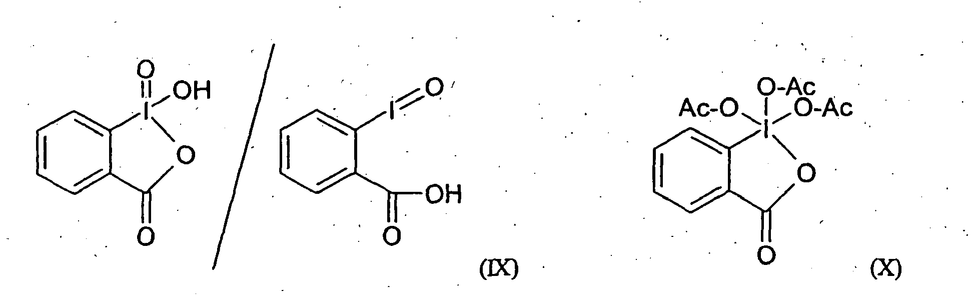

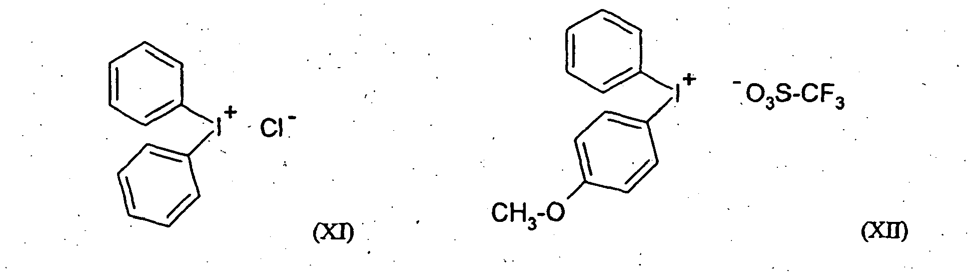

Besonders bevorzugte hypervalente Iodverbindungen sind Natriumiodat, Kaliumiodat, Natriumperiodat, Di(acetoxy)iodbenzol, Bis(trifluor-acetoxy)iodbenzol und Koser's Reagens (Hydroxy(tosyloxy)iodbenzol).

Die oxidative Polymerisation der Thiophene der Formel (II) wird je nach verwendetem Oxidationsmitel und gewünschter Polymerisationszeit im Allgemeinen bei Temperaturen von -10 bis + 250°C, bevorzugt bei Temperaturen von 0 bis 200°C, besonders bevorzugt bei Temperaturen von 0 bis 100°C vorgenommen. Die Polymerisationszeit kann je nach Ansatzgröße, Polymerisationstemperatur und Oxidationsmittel von wenigen Minuten bis zu mehreren Tagen betragen. Im Allgemeinen liegt die Polymerisationszeit zwischen 30 Minuten und 150 Stunden.

Die oxidative Polymerisation der Thiophene der Formel (II) erfordert theoretisch je Mol Thiophen 2,25 Äquivalente Oxidationsmittel (siehe z.B. J. Polym. Sc. Part A, Polymer Chemistry Vol. 26, S. 1287 (1988). Es ist jedoch auch möglich, Oxidationsmittel in einer geringeren Menge als der theroretisch erforderlichen einzusetzen. Bevorzugt werden Thiophene und Oxidationsmittel in einem Gewichtsverhältnis von 4 : 1 bis 1 : 20 eingesetzt. In bevorzugten Ausführungsformen wird das Oxidationsmittel jedoch in einem gewissen Überschuss, z.B. einem Überschuss von 0,1 bis 2 Äquivalenten je Mol Thiophen angewendet. Besonders bevorzugt werden somit mehr als 2,25 Äquivalente Oxidationsmittel je Mol Thiophen verwendet.

Es ist ausgesprochen überraschend, dass die erfindungsgemäß zu verwendenden hypervalenten Iodverbindungen sich zur oxidativen Polymerisation von Thiophenen eignen. Es ist zum Beispiel bekannt, dass Schwefelverbindungen mit Natriumperiodat zu Sulfoxiden oxidiert werden (N. J. Leonard, C. R. Johnson, J. Org. Chem. 27 (1962), S. 282; K.-T- Liu, Y.-C. Tong, J. Org. Chem. 43 (1978), S. 2717). Auch durch organische hypervalente Iodverbindungen werden Sulfide zu Sulfoxiden und Sulfonen oxidiert (siehe z. B. R.-Y. Yang, L.-X. Dai, Synth. Commun. 24 (1994), S. 2229 und die Bemerkung "Sulphides are oxidized readily by most hypervalent iodine reagent" in "Hypervalent Iodine In Organic Synthesis" von A. Varvoglis, Academic Press, San Diego/London, 1997, S. 94). Außerdem ist bekannt, dass hypervalente lodverbindungen häufig geeignet sind, Alkohole zu Carbonylverbindungen zu oxidieren (siehe z. B. "Hypervalent Iodine In Organic Synthesis" von A. Varvoglis S. 70, 84, 206 - 208), wohingegen entsprechend der vorliegenden Erfindung insbesondere Alkohole oder Mischungen enthaltend Alkohole in bevorzugten Ausführungsformen gut geeignete Lösungsmittel für die oxidative Polymerisation der Thiophene darstellen.

Gegenstand der Erfindung ist weiterhin die Verwendung hypervalenter Iodverbindungen zur oxidativen Polymerisation von Thiophenen oder deren vorangehend aufgeführten Derivaten. Besonders bevorzugt ist dabei die Verwendung von Natriumiodat, Natriumperiodat, Di(acetoxy)iodbenzol, Bis(trifluor-acetoxy)iodbenzol und Koser's Reagens.

Die oxidative Polymerisation von Polythiophenen gemäß erfindungsgemäßem Verfahren kann für unterschiedliche Anwendungen der resultierenden Thiophene zum Einsatz kommen. Es ist beispielsweise möglich, stabile Dispersionen enthaltend Polythiophene oder aber direkt leitfähige Schichten enthaltend Polythiophene herzustellen, die jeweils zahlreichen weiteren Anwendungen zugänglich sind.

Weiterhin Gegenstand der vorliegenden Erfindung ist somit ein Verfahren zur Herstellung von Dispersionen enthaltend gegebenenfalls substituierte Polythiophene durch oxidative Polymerisation von gegebenenfalls substituierten Thiophenen oder Thiophenderivaten in Gegenwart wenigstens eines Lösungsmittels und gegebenenfalls wenigstens eines Gegenions, **dadurch gekennzeichnet, dass** als Oxidationsmittel wenigstens eine hypervalente Iodverbindung verwendet wird.

Zur Polymerisation werden die Thiophene oder deren Derivate, Oxidationsmittel und gegebenenfalls Gegenionen vorzugsweise in dem oder den Lösungsmitteln gelöst und solange bei der vorgesehenen Polymerisationtelnperatur gerührt, bis die Polymerisation abgeschlossen ist.

Thiophene und Gegenionen, insbesondere im Falle polymerer Gegenionen, werden dabei in einer solchen Menge eingesetzt, dass Gegenion(en) und Polythiophen(e) nachher in einem Gewichtsverhältnis von 0,5:1 bis 50:1, bevorzugt von 1:1 bis 30:1, besonders bevorzugt 2:1 bis 20:1 vorliegen. Das Gewicht der Polythiophene entspricht hierbei der Einwaage der eingesetzten Monomere unter der Annahme, dass bei der Polymerisation vollständiger Umsatz erfolgt.

Weiterhin Gegenstand der vorliegenden Erfindung ist ebenfalls ein Verfahren zur Herstellung leitfähiger Schichten enthaltend gegebenenfalls substituierte Polythiophene, **dadurch gekennzeichnet, dass** gegebenenfalls substituierte Thiophene oder Thiophenderivate in An- oder Abwesenheit wenigstens eines Lösungsmittels mit wenigstens einer hypervalenten Iodverbindung als Oxidationsmittel auf einer geeigneten Unterlage oxidativ polymerisiert werden.

Letztgenanntes Verfahren - in der Fachwelt oft auch als *in*-*situ*-Polymerisation bezeichnet - wird beispielsweise auch zur Herstellung von Schichten eingesetzt die Bestandteil von Kondensatoren sind, beispielsweise zur Herstellung des Feststoffelektrolyten oder der Elektroden.

Bei der Unterlage kann es sich beispielsweise um Glas, Dünstglas (flexibles Glas) oder entsprechend zu beschichtende Kunststoffe in Form von Formkörpern oder Folien sowie um sonstige zu beschichtende Formkörper, beispielsweise Anoden von Kondensatoren handeln.

Je nach Anwendungsziel für die nach dem erfindungsgemäßen Verfahren synthetisierten Polythiophene kann der Einsatz unterschiedlicher hypervalenter Iodverbindungen von Vorteil sein.

Beispielsweise eignen sich wasserlösliche anorganische hypervalente Iodverbindungen, wie Iodsäure und ihre Salze, beispielsweise Alkali- oder Erdalkalisalze wie Natrium- und Kaliumiodat (Oxidationsstufe + 5), Periodsäure und ihre Salze, beispielsweise Alkali- oder Erdalkalisalze wie wie Natrium-periodat (Oxidationsstufe + 7), oder die formal von diesen Sauerstoffsäuren des Iods abgeleiteten Anhydride, wie z. B. das Iodpentoxid (I₂O₅) für die Herstellung wässriger Dispersionen enthaltend die vorangehend aufgeführten Polythiophene. Bevorzugt sind hierbei Natriumiodat oder Natriumperiodat. Eine besonders bevorzugte nach dieser Variante herstellbare Dispersion ist eine wässrige Dispersionen enthaltend Poly(3,4-ethylendioxythiophen) und Polystyrolsulfonsäure (PEDT/PSS-Komplex).

In nichtwässrigen Lösungsmitteln lösliche hypervalente Iodverbindungen, wie z. B. Di(acetoxy)-iodbenzol, Bis(trifluoracetoxy)iodbenzol, Koser's Reagens oder Iodosobenzol eignen sich besonders für die Herstellung nichtwässriger Dispersionen oder für die Herstellung *in situ-*polymerisierter Polythiophen-Schichten, bevorzugt Poly(3,4-ethylendioxythiophen)-Schichten (PEDT-Schichten), die üblicherweise aus organischen Lösemitteln gegebenenfalls in Gegenwart geeigneter Gegenionen oder Gegenionen liefernden Säuren erzeugt werden.

In den vorangehend aufgeführten Verfahren zur Herstellung von Dispersionen und leitfähigen Schichten werden die bereits erwähnten Polythiophene erhalten und können die bereits erwähnten Thiophene und deren Derivate, hypervalenten Iodverbindungen, Gegenionen etc. verwendet werden. Vorzugsbereiche gelten analog.

Bevorzugte nichtwässrige Lösungsmittel für die Herstellung nichtwässriger Dispersionen oder *in situ*-polymerisierter Polythiophen-schichten können z. B. Alkohole, wie Methanol, Ethanol, n-Propanol, iso-Propanol, n-Butanol, Ethylenglykol, Diethylenglykol sein, wobei von diesen alkoholischen Lösungsmitteln Ethanol und n-Butanol besonders bevorzugt eingesetzt werden. Es können aber auch Lösungsmittel aus der Gruppe der aliphatischen und aromatischen Kohlenwasserstoffe, wie Hexan, Heptan, Oktan, Toluol oder Xylol, der halogenierten aliphatischen oder aromatischen Kohlenwasserstoffe, wie Methylenchlorid, Chloroform, Chlorbenzol oder o-Dichlorbenzol, ferner Ether, wie Diethylether, Di-iso-propylether, tert.Butylmethylether, Tetrahydrofuran (THF), Dioxan oder Diglyme, Amide, wie Dimethylformamid, Dimethylacetamid oder N-Methylpyrrolidon alleine oder im Gemisch mit Alkoholen eingesetzt werden. Zu einem geringen Anteil, d.h. vorzugsweise weniger als 5 Gew.- %, kann auch Wasser enthalten sein.

Für die Herstellung wässriger Dispersionen können ebenfalls geringe Anteile, d.h. vorzugsweise weniger als 10 Gew.-%, vorangehender Lösungsmittel, insbesondere Alkohole, im Wasser enthalten sein.

Für die Herstellung von stabilen wässrigen Polythiophen-Dispersionen ist es vorteilhaft, wasserlösliche Gegenionen der vorangehend aufgeführten, bevorzugt Sulfonsäuren, insbesondere polymere Sulfonsäuren, wie beispielsweise Polystyrolsulfonsäure (PSS) einzusetzen.

Für die Herstellung nichtwässriger Polythiophen-Dispersionen oder die *in*-*situ*-Herstellung von Schichten aus organischer Lösung ist es vorteilhaft" ausreichend in den Lösungsmitteln lösliche Gegenionen, bevorzugt Sulforisäuren einzusetzen. Dies können vorteilhafterweise monomere Gegenionen wie beispielsweise p-Toluolsulfonsäure, Dodecylbenzolsulfonsäure oder Camphersulfon-Die folgenden Beispiele dienen der beispielhaften Erläuterung der Erfindung und sind nicht als Beschränkung aufzufassen.

### Beispiele

### Beispiel 1

### Herstellung einer Poly(3,4-ethylendioxythiophen)-Dispersion (PEDT:PSS-Disnersion) mit Natriumiodat als Oxidationsmittel

Eine Lösung von 5,0 g PSS (Molekulargewicht M_{w} = 48000), 2,0 g EDT und 1,178 g Natriumiodat in 489 g Wasser wurde 100 h bei 50 °C gerührt. Danach wurde die tiefblaue Reaktionsmischung mit je 41 g Kationen- und Anionenaustauscher (Lewatit^{®} S 100 und Lewatit^{®} MP 62) 8 h entionisiert und anschließend das Ionenaustauscher-Harz abfiltriert.

Die entstandene Zubereitung wurde im Gewichtsverhältnis 1 : 1 : 1 : 1 mit Aceton, Methanol und Wasser gemischt und mit 60 µm Nassfilmdicke auf eine Poly(ethylenterephthalat)-Folie aufgerakelt. Nach Trocknen bei 23 °C betrug der Oberflächenwiderstand der hellblauen, leitfähigen Beschichtung 46 kΩ/sq.

### Beispiel 2

### Herstellung einer PEDT:PSS-Dispersion mit Natriumperiodat als Oxidationsmittel

Eine Lösung von 5,0 g PSS (Molekulargewicht M_{w} = 48000), 2,0 g EDT und 0,937 g Natriumperiodat in 489 g Wasser wurde 16 h bei 23 °C gerührt. Danach wurde die tiefblaue Reaktionsmischung mit je 41 g Kationen- und Anionenaustauscher (Lewatit^{®} S 100 und Lewatit^{®} MP 62) 8 h entionisiert und anschließend das Ionenaustauscher-Harz abfiltriert.

Die entstandene Zubereitung wurde im Gewichtsverhältnis 1 : 1 : 1 : 1 mit Aceton, Methanol und Wasser gemischt und mit 60 µm Nassfilmdicke auf eine Poly(ethylenterephthalat)-Folie zu einer hellblauen, leitfähigen Beschichtung aufgerakelt.

### Beispiel 3

### In situ-Polymerisation von 3,4-Ethylendioxythiophen (EDT) mit Di(acetoxy)iodbenzol als Oxidationsmittel

5,66 g einer 10 %igen Lösung von Di(acetoxy)iodbenzol in Ethanol, 0,2 g EDT und 2,68 g einer 50 %igen Lösung von p-Toluolsulfonsäure-Monohydrat in Ethanol wurden gemischt und mit 12 µm Nassfilmdicke auf eine Polycarbonatfolie aufgerakelt. Nach 1 h Trocknung bei 85 °C wurde kurz mit Wasser ausgewaschen; danach wurde ein leitfähiger blauer Film mit einem Oberflächenwiderstand von 7,66 kΩ/sq erhalten.

### In situ-Polymerisation von EDT mit Bis(trifluoracetoxy)iodbenzol als Oxidationsmittel

1,51 g einer 50 %igen Lösung von Bis(trifluoracetoxy)iodbenzol in Ethanol, 0,2 g EDT und 2,68 g einer 50 %igen Lösung von p-Toluolsulfonsäure-Monohydrat in Ethanol wurden gemischt und mit 12 µm Nassfilmdicke auf eine Polycarbonatfolie aufgerakelt. Nach 1 h Trocknung bei 85 °C wurde kurz mit Wasser ausgewaschen; danach wurde ein leitfähiger blauer Film mit einem Oberflächenwiderstand von 6,92 kΩ/sq erhalten.

### Beispiel 5

### In situ-Polymerisation von EDT mit Hydroxy-tosyloxy-iodbenzol (Koser's Reagens) als Oxidationsmittel

2,76 g einer 25 %igen Lösung von Hydroxy-tosyloxy-iodbenzol (Koser's Reagens) in Ethanol, 0,2 g EDT und 2,68 g einer 50 %igen Lösung von p-Toluolsulfonsäure-Monohydrat in Ethanol wurden gemischt und mit 12 µm Nassfilmdicke auf eine Polycarbonatfolie aufgerakelt. Nach 3 h Trocknung bei 60 °C wurde kurz mit Wasser ausgewaschen; danach wurde ein leitfähiger blaugrüner Film mit einem Oberflächenwiderstand von 1,45 kΩ/sq erhalten.

### Beispiel 6

### Herstellung einer Poly(3,4-ethylenoxythiathiophen)-Dispersion (PEOTT:PSS-Dispersion) mit Natriumiodat als Oxidationsmittel

Eine Lösung von 1,06 g PSS (Molekulargewicht M_{w} = 48000), 0,47 g EOTT und 0,25 g Natriumiodat in 103,7 g Wasser wurde 7 d bei 50 °C gerührt. Danach wurde die tiefblaue Reaktionsmischung mit je 9 g Kationen- und Anionenaustauscher (Lewatit^{®} S 100 und Lewatit^{®} MP 62) 8 h entionisiert und anschließend das Ionenaustauscher-Harz abfiltriert. Ionengehalte: 1ppm Sulfat, 14 ppm Na⁺, < 20 ppm Iodid.

Die entstandene Zubereitung wurde mit 60 µm Nassfilmdicke auf eine Poly(ethylenterephthalat)-Folie zu einer hellblauen, leitfähigen Beschichtung aufgerakelt; Oberflächenwiderstand 11 MΩ/sq.

### Beispiel 7

### Herstellung einer Poly(3,4-ethylendioxythiophen)-Dispersion (PEDT:PSS-Dispersion) mit Iodsäure als Oxidationsmittel

Eine Lösung von 5,0 g PSS (Molekulargewicht M_{w} = 48000), 2,0 g EDT und 1,04 g Iodsäure in 488,6 g Wasser wurde 100 h bei 50 °C gerührt. Danach wurde die tiefblaue Reaktionsmischung mit je 41 g Kationen- und Anionenaustauscher (Lewatit^{®} S 100 und Lewatit^{®} MP 62) 8 h entionisiert und anschließend das Ionenaustauscher-Harz abfiltriert. 1g der entstandenen Zubereitung wurde mit je 1 g Methanol und 1 g Aceton gemischt und mit 60 µm Nassfilm-Schichtsdicke auf eine PET-Folie aufgerakelt. Nach Trocknung bei 23 °C wurde ein Oberflächenwiderstand des hellblauen, leitfähigen Films von 230 kΩ/sq gemessen.

## Patentansprüche

1. Verfahren zur Herstellung von Polythiophenen durch oxidative Polymerisation von Thiophenen oder Thiophenderivaten, **dadurch gekennzeichnet, dass** als Oxidationsmittel wenigstens eine hypervalente Iodverbindung eingesetzt wird.

2. Verfahren gemäß Anspruch 1, **dadurch gekennzeichnet, dass** Polythiophene enthaltend wiederkehrende Einheiten der allgemeinen Formel (I), 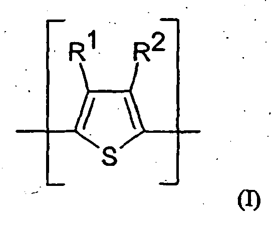 worin
R¹ und R² unabhängig voneinander jeweils für H, einen gegebenenfalls subsituierten C₁-C₁₈-Alkylrest oder einen gegebenenfalls subsituierten C₁-C₁₈- Alkoxyrest, oder
R¹ und R² zusammen für einen gegebenenfalls substituierten C₁-C₈-Alkylenrest, ei- nen gegebenenfalls substituierten C₁-C₈-Alkylenrest, worin ein oder meh- rere C-Atom(e) durch ein oder mehrere gleiche oder unterschiedliche He- teroatome ausgewählt aus O oder S ersetzt sein können, bevorzugt einen C₁-C₈-Dioxyalkylenrest, einen gegebenenfalls substituierten C₁-C₈- Oxythiaalkylenrest oder einen gegebenenfalls substituierten C₁-C₈- Dithiaalkylenrest, oder für einen gegebenenfalls substituierten C₁-C₈- Alkylidenrest, worin gegebenenfalls wenigstens ein C-Atom durch ein He- teroatom ausgewählt aus O oder S ersetzt sein ist, stehen,
durch oxidative Polymerisation von Thiophenen der allgemeinen Formel (II), 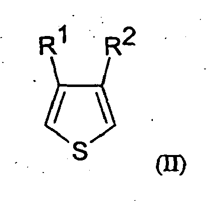 worin R¹ und R² die für die allgemeine Formel (I) genannte Bedeutung haben, hergestellt werden.

3. Verfahren gemäß Anspruch 1 oder 2, **dadurch gekennzeichnet, dass** Polythiophene enthaltend wiederkehrende Einheiten der allgemeinen Formel (I-a) und/oder (I-b) 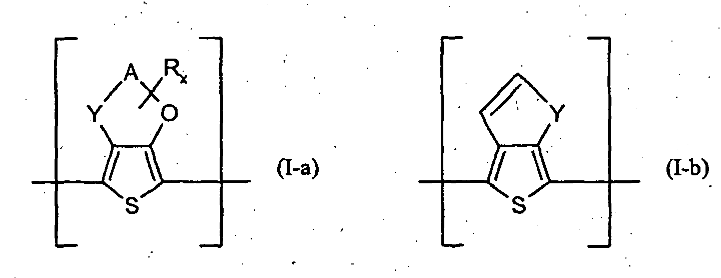 worin
A für einen gegebenenfalls substituierten C₁-C₅-Alkylenrest, bevorzugt für einen ge- gebenenfalls substituierten C₂-C₃-Alkylenrest steht,
Y für O oder S steht,
R für einen linearen oder verzweigten, gegebenenfalls substituierten C₁-C₁₈-Alkylrest, einen gegebenenfalls substituierten C₅-C₁₂-Cycloalkylrest, einen gegebenenfalls substituierten C₆-C₁₄-Arylrest, einen gegebenenfalls substituierten C₇-C₁₈- Aralkylrest, einen gegebenenfalls substituierten C₁-C₄-Hydroxyalkylrest oder einen Hydroxylrest steht,
x für eine ganze Zahl von 0 bis 8, bevorzugt für 0 oder 1 steht und
für den Fall, dass mehrere Reste R an A gebunden sind, diese gleich oder unterschiedlich sein können,
durch oxidative Polymerisation von Thiophenen der allgemeinen Formel (II-a) und/oder (II-b), 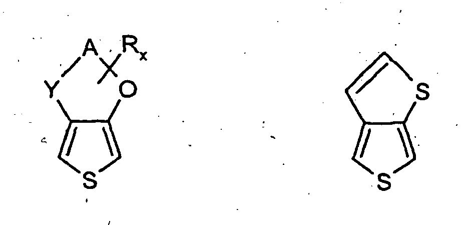 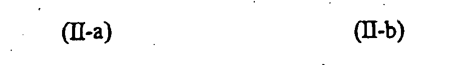 worin A, Y, R und x die für die allgemeinen Formeln (II-a) und (II-b) genannte Bedeutung haben,
hergestellt werden.

4. Verfahren gemäß wenigstens einem der Ansprüche 1 bis 3, **dadurch gekennzeichnet, dass** Poly(3,4-ethylendioxythiophen) durch oxidative Polymerisation von 3,4-Ethylendioxythiophen hergestellt wird.

5. Verfahren gemäß wenigstens einem der Ansprüche 1 bis 4, **dadurch gekennzeichnet, dass** als Oxidationsmittel organische oder anorganische Iodverbindungen verwendet werden, in denen das Iodatom mehr als einfach koordiniert ist und nicht in der formalen Oxidationsstufe -1 oder 0 vorliegt.

6. Verfahren gemäß wenigstens einem der Ansprüche I bis 5, **dadurch gekennzeichnet, dass** als Oxidationsmittel organische Iodverbindungen wie Aryliod-(III)-Verbindungen, Aryl- oder Aryl-alkyl-iodoniumsalze oder Iod-(III)-Salze von C₁-C₁₈-Alkylsulfon- oder C₁-C₁₈-Alkylcarbonsäuren oder anorganische Iodverbindungen wie Iodsäure und ihre Alkali- oder Erdalkalisalze, Periodsäure und ihre Alkali- oder Erdalkalisalze oder die von diesen Sauerstoffsäuren des Iods abgeleiteten Anhydride.

7. Verfahren gemäß wenigstens einem der Ansprüche 1 bis 6, **dadurch gekennzeichnet, dass** die oxidative Polymerisation in Gegenwart wenigstes eines Lösungsmittels durchgeführt wird.

8. Verfahren gemäß wenigstens einem der Ansprüche 1 bis 7, **dadurch gekennzeichnet, dass** die oxidative Polymerisation in Gegenwart wenigstes eines Gegenions durchgeführt wird.

9. Verfahren gemäß wenigstens einem der Ansprüche 1 bis 8, **dadurch gekennzeichnet, dass** die oxidative Polymerisation bei Temperaturen von -10 bis 250°C durchgeführt wird.

10. Verfahren gemäß wenigstens einem der Ansprüche 1 bis 9, **dadurch gekennzeichnet, dass** Thiophene und Oxidationsmittel in einem Gewichtsverhältnis von 4 : 1 bis 1 : 20 eingesetzt werden.

11. Verwendung von hypervalenten Iodverbindungen als Oxidationsmittel für die Herstellung gegebenenfalls substituierter Polythiophene.

12. Verfahren zur Herstellung von Dispersionen enthaltend gegebenenfalls substituierte Polythiophene durch oxidative Polymerisation von gegebenenfalls substituierten Thiophenen oder Thiophenderivaten in Gegenwart wenigstens eines Lösungsmittels und gegebenenfalls wenigstens eines Gegenions, **dadurch gekennzeichnet, dass** als Oxidationsmittel wenigstens eine hypervalente Iodverbindung verwendet wird.

13. Verfahren zur Herstellung leitfähiger Schichten enthaltend gegebenenfalls substituierte Polythiophene, **dadurch gekennzeichnet, dass** gegebenenfalls substituierte Thiophene oder Thiophenderivate in An- oder Abwesenheit wenigstens eines Lösungsmittels mit wenigstens einer hypervalenten Iodverbindung als Oxidationsmittel auf einer geeigneten Unterlage oxidativ polymerisiert werden.

14. Verfahren gemäß Anspruch 13, **dadurch gekennzeichnet, dass** die leitfähige Schicht Bestandteil eine Kondensators ist.

## Claims

1. Process for preparing polythiophenes by oxidatively polymerizing thiophenes or thiophene derivatives, **characterized in that** the oxidizing agent used is at least one hypervalent iodine compound.

2. Process according to claim 1, **characterized in that** polythiophenes containing repeat units of the general formula (I) 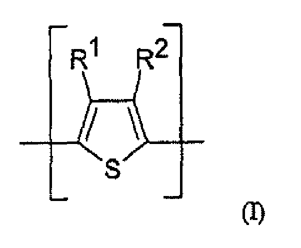 in which
R¹ and R² are each independently H, an optionally substituted C₁-C₁₈-alkyl radical or an optionally substituted C₁-C₁₈-alkoxy radical or
R¹ and R² together are an optionally substituted C₁-C₈-alkylene radical, an optionally substituted C₁-C₈-alkylene radical in which one or more carbon atom(s) may be replaced by one or more identical or different heteroatoms selected from 0 and S, preferably a C₁-C₈-dioxyalkylene radical, an optionally substituted C₁-C₈-oxythiaalkylene radical or an optionally substituted C₁-C₈- dithiaalkylene radical, or an optionally substituted C₁-C₈-alkylidene radical in which at least one carbon atom is optionally replaced by a heteroatom selected from 0 and S,
are prepared by oxidatively polymerizing thiophenes of the general formula (II) 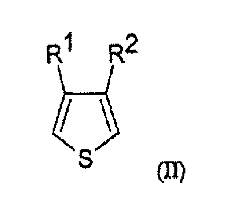 where R¹ and R² are each as defined for the general formula (I).

3. Process according to claim 1 or 2, **characterized in that** polythiophenes containing repeat units of the general formula (I-a) and/or (I-b) 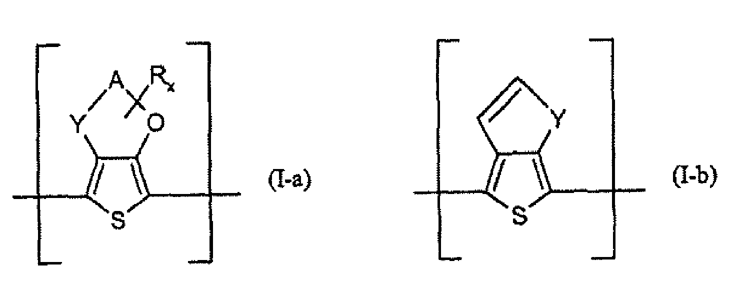 in which
A is an optionally substituted C₁-C₅-alkylene radical, preferably an optionally substituted C₂-C₃-alkylene radical,
Y is 0 or S,
R is a linear or branched, optionally substituted C₁-C₁₈-alkyl radical, an optionally substituted C₅-C₁₂-cycloalkyl radical, an optionally sub- stituted C₆-C₁₄-aryl radical, an optionally substituted C₇-C₁₈-aralkyl radical, an optionally substituted C₁-C₄-hydroxyalkyl radical or a hydroxyl radical,
x is an integer of 0 to 8, preferably of 0 or 1, and
in the case that a plurality of R radicals is bonded to A, they may be the same or different,
are prepared by oxidatively polymerizing thiophenes of the general formula (II-a) and/or (II-b) 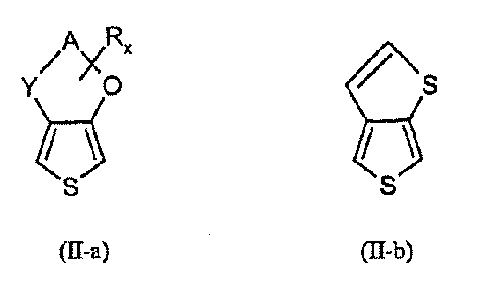 in which A, Y, R and x are each as defined for the general formulae (II-a) and (II-b).

4. Process according to at least one of claims 1 to 3, **characterized in that** poly(3,4-ethylenedioxythiophene) is prepared by oxidatively polymerizing 3,4-ethylenedioxythiophene.

5. Process according to at least one of claims 1 to 4, **characterized in that** the oxidizing agents used are organic or inorganic iodine compounds in which the iodine atom is more than monocoordinated and is not present in the formal oxidation state of -1 or 0.

6. Process according to at least one of claims 1 to 5, **characterized in that** the oxidizing agents used are organic iodine compounds such as aryl-iodine(III) compounds, aryl- or arylalkyliodonium salts or iodine(III) salts of C₁-C₁₈-alkylsulfonic acids or C₁-C₁₈-alkylcarboxylic acids, or inorganic iodine compounds such as iodic acid and the alkali metal or alkaline earth metal salts thereof, periodic acid and the alkali metal or alkaline earth metal salts thereof, or the anhydrides derived from these oxygen acids of iodine.

7. Process according to at least one of claims 1 to 6, **characterized in that** the oxidative polymerization is carried out in the presence of at least one solvent.

8. Process according to at least one of claims 1 to 7, **characterized in that** the oxidative polymerization is carried out in the presence of at least one counterion.

9. Process according to at least one of claims 1 to 8, **characterized in that** the oxidative polymerization is carried out at temperatures of from -10 to 250°C.

10. Process according to at least one of claims 1 to 9, **characterized in that** thiophenes and oxidizing agents are used in a weight ratio of from 4:1 to 1:20.

11. Use of hypervalent iodine compounds as oxidizing agents for the preparation of optionally substituted polythiophenes.

12. Process for preparing dispersions comprising optionally substituted polythiophenes by oxidatively polymerizing optionally substituted thiophenes or thiophene derivatives in the presence of at least one solvent and optionally of at least one counterion, **characterized in that** the oxidizing agent used is at least one hypervalent iodine compound.

13. Process for producing conductive layers comprising optionally substituted polythiophenes, **characterized in that** optionally substituted thiophenes or thiophene derivatives are oxidatively polymerized on a suitable substrate with at least one hypervalent iodine compound as an oxidizing agent in the presence or absence of at least one solvent.

14. Process according to claim 13, **characterized in that** the conductive layer is part of a capacitor.

## Revendications

1. Procédé pour la préparation de polythiophènes par polymérisation oxydante de thiophènes ou de dérivés de thiophène, **caractérisé en ce qu'**on utilise comme oxydant au moins un composé iodé hypervalent.

2. Procédé selon la revendication 1, **caractérisé en ce qu'**on prépare des polythiophènes contenant des motifs répétitifs de formule générale (I), 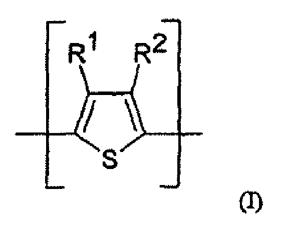 dans laquelle
R¹ et R² représentent chacun, indépendamment l'un de l'autre, H, un radical alkyle en C₁-C₁₈ éventuellement substitué ou un radical alcoxy en C₁-C₁₈ éventuellement substitué, ou
R¹ et R² représentent ensemble un radical alkylène en C₁-C₈ éventuellement substitué, un radical alkylène en C₁-C₈ éventuellement substitué dans lequel un ou plusieurs atome(s) de carbone peut/peuvent être remplacé(s) par un ou plusieurs hétéroatomes, identiques ou différents, choisi(s) parmi 0 et S, de préférence un radical dioxyalkylène en C₁-C₈, un radical oxythiaalkylène en C₁-C₈ éventuellement substitué ou un radical dithiaalkylène en C₁-C₈ éventuellement substitué, ou représentent un radical alkylidène en C₁-C₈ éventuellement substitué, dans lequel éventuellement au moins un atome de carbone est remplacé par un hétéroatome choisi parmi 0 et S,
par polymérisation oxydante de thiophènes de formule générale (II) 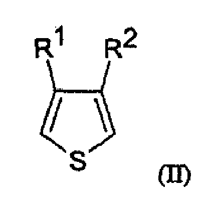 dans laquelle R¹ et R² ont les significations données pour la formule générale (I).

3. Procédé selon la revendication 1 ou 2, **caractérisé en ce qu'**on prépare des polythiophènes contenant des motifs répétitifs de formule générale (I-a) et/ou de formule générale (I-b) 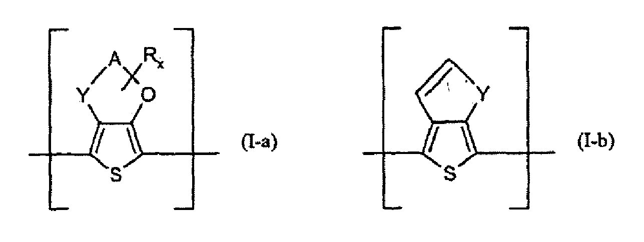 formules dans lesquelles
A représente un radical alkylène en C₁-C₅ éventuellement substitué, de préférence un radical alkylène en C₂-C₃ éventuellement substitué,
Y représente 0 ou S,
R représente un radical alkyle en C₁-C₁₈ éventuellement substitué, un radical cycloalkyle en C₅-C₁₂ éventuellement substitué, un radical aryle en C₆-C₁₄ éventuellement substitué, un radical aralkyle en C₇-C₁₈ éventuellement substitué, un radical hydroxyalkyle en C₁-C₄ éventuellement substitué ou un radical hydroxy,
x représente un nombre entier allant de 0 à 8, de préférence 0 ou 1 et
dans le cas où plusieurs radicaux R sont liés à A, ceux-ci peuvent être identiques ou différents,
par polymérisation oxydante de thiophènes de formule générale (II-a) et/ou de formule générale (II-b) 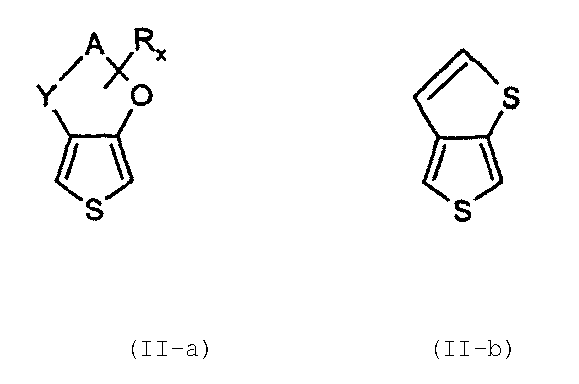 formules dans lesquelles A, Y, R et x ont les significations données pour les formules générales (II-a) et (II-b).

4. Procédé selon au moins l'une des revendications 1 à 3, **caractérisé en ce qu'**on prépare du poly(3,4-éthylènedioxythiophène) par polymérisation oxydante de 3,4-éthylènedioxythiophène.

5. Procédé selon au moins l'une des revendications 1 à 4, **caractérisé en ce qu'**on utilise comme oxydant des composés iodés organiques ou inorganiques, dans lesquels l'atome d'iode est plus d'une fois coordonné et ne se trouve pas au degré d'oxydation -1 ou 0 selon la formule.

6. Procédé selon au moins l'une des revendications 1 à 5, **caractérisé en ce qu'**on utilise comme oxydant des composés iodés organiques tels que des composés aryliodés-(III), des sels d'aryl- ou aryl-alkyl-iodonium ou des sels d'iode-(III) d'acides alkyl(C₁-C₁₈)sulfoniques ou d'acides alkyl(C₁-C₁₈)carboxyliques ou des composés iodés inorganiques, tels que l'acide iodique et ses sels alcalins ou alcalino-terreux, l'acide periodique et ses sels alcalins ou alcalino-terreux ou les anhydrides dérivés de l'iode de ces acides oxygénés.

7. Procédé selon au moins l'une des revendications 1 à 6, **caractérisé en ce que** la polymérisation oxydante est effectuée en présence d'au moins un solvant.

8. Procédé selon au moins l'une des revendications 1 à 7, **caractérisé en ce que** la polymérisation oxydante est effectuée en présence d'au moins un ion opposé.

9. Procédé selon au moins l'une des revendications 1 à 8, **caractérisé en ce que** la polymérisation oxydante est effectuée à des températures de -10 à 250 °C.

10. Procédé selon au moins l'une des revendications 1 à 9, **caractérisé en ce que** les thiophènes et oxydants sont utilisés en un rapport pondéral de 4:1 à 1:20.

11. Utilisation de composés iodés hypervalents en tant qu'oxydant pour la préparation de polythiophènes éventuellement substitués.

12. Procédé pour la préparation de dispersions contenant des polythiophènes éventuellement substitués, par polymérisation oxydante de thiophènes ou de dérivés de thiophènes, éventuellement substitués, en présence d'au moins un solvant et éventuellement d'au moins un ion opposé, **caractérisé en ce qu'**on utilise comme oxydant au moins un composé iodé hypervalent.

13. Procédé pour la production de couches conductrices contenant éventuellement des polythiophènes éventuellement substitués, **caractérisé en ce que** des thiophènes ou des dérivés de thiophènes, éventuellement substitués, sont polymérisés par oxydation en présence ou en absence d'au moins un solvant, avec au moins un composé iodé hypervalent en tant qu'oxydant, sur un support approprié.

14. Procédé selon la revendication 13, **caractérisé en ce que** la couche conductrice est un composant d'un condensateur.
